# EUROPEAN PATENT SPECIFICATION

(11) **EP 1 765 715 B1**
(45) Date of publication and mention of the grant of the patent: **16.11.2011**
(21) Application number: 05752720.2
(22) Date of filing: 21.06.2005
(51) Int. Cl.: B66C 1/02

(54) **A METHOD FOR MANUFACTURING A GRIPPING MEANS HAVING INTEGRATED VACUUM CHANNELS**
VERFAHREN ZUR HERSTELLUNG EINES GREIFMITTELS MIT INTEGRIERTEN VAKUUMKANÄLEN
PROCEDE DE FABRICATION D'UN DISPOSITIF DE SAISIE A CANAUX SOUS VIDE INTEGRES

(30) Priority: 23.06.2004 SE 0401621
(43) Date of publication of application: 28.03.2007
(73) Proprietor: Villa Ekbacka AB, 330 10 Bredaryd (SE)
(72) Inventor: JOHANSSON, Kenny, S-330 10 Bredaryd (SE)
(74) Representative: Strandin, Heléne
(86) International application number: PCT/SE2005/000975
(87) International publication number: WO 2006/001762

(56) References cited:
- SE-C2- 507 861
- US-A- 6 080 343

## Description

The present invention refers to a method for manufacturing a gripping means for fixing a detail intended to be handled by aid of a robot arm on a robot and said gripping means comprises an optional number of suction cup-provided arms having vacuum channels integrated in an assembling channel.

More and more robots are today used within the industry for lifting details, to orientate details, take out details from plunger moulding machines etc. On said robot arm a gripping means is situated, which gets hold of or fastens to that detail, which is to be treated. A very much useful and gentle way for handling is carried out by aid of vacuum and suction cups, which fixes to the detail. Those gripping means used today are constructed with special designed aluminium profiles as supports of hoses and suction cups. These must be very careful secured along the profiles, so that all movements can be performed without having said hoses and cables being subjected to unnecessary influence. The time to assemble the gripping means and the adjustment of all hoses involves a lot of dispenses, when it often requires a great accuracy. Many times vacuum losses can occur if wrong hose dimensions are used or too long hoses. There is also a risk that the gripping means can change itself during transport and storage.

Document SE 507861 C2 describes a gripping means according to the preamble of claim 1.

One object of the present invention is therefore to provide a better solution by a method for manufacturing of simple or complicated gripping means having integrated vacuum channels in a simple and rational way by free-forming. In this way a gripping means is provided, which is directly adapted for its function and as to its material is optimized to the lowest weight. It is desired that the gripping means is as light as possible as this influences the cycle time. In using the free-forming method all necessary channels and connections integrated in the gripping means are obtained and it only remains to mount the suction cups and connect the gripping means to an actual vacuum socket. The great advantage with the invention is the possibility to obtain complex geometries, to shorten recurrent times and lower the costs.

The present invention is based on a method that by free-forming manufacture gripping means having integrated vacuum channels. In this way there are possibilities to design complicated forms and also forms, which are enclosed in other enclosed forms, so that the capacity of the system can be used to design "impossible" objects. The gripping means is designed by aid of CAD, whereupon the gripping means with a great precision can be manufactured by free-forming. Further gripping means having the same design can just like that be made having exact measurement accuracy. A gripping means having several arms will be very light and can be provided with a connection in the centre and suction cups in the ends of the arms. In each arm the integrated vacuum channels run, which are assembled in the centre of the gripping means.

The invention will now be described in more detail below with help of a preferred embodiment example with reference to the accompanying drawing, on which
- Fig. 1: shows a gripping means having arms and integrated vacuum channels, which are manufactured using the method of free- forming,
- Fig. 2: shows the centre of a gripping means having arms with integrated vacuum channels, a centre with integrated assembling channel and integrated connection channel, manufactured in using the method for free-forming and
- Fig. 3: shows how the suction cups are connected to the vacuum channels in a gripping means manufactured in using the method for free-forming a gripping means having integrated vacuum channels.

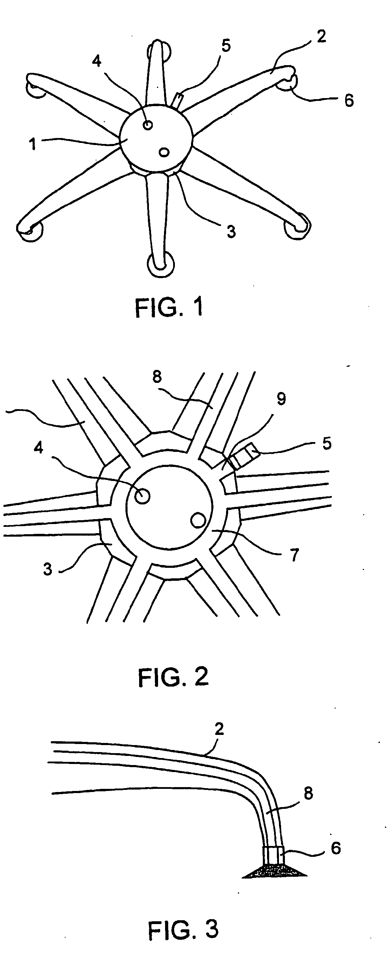

The figures are illustrating a gripping means manufactured by free-forming with integrated vacuum channels 8 according to a preferable embodiment example of the present invention. In fig. 1 a free-formed gripping means 1 having arms 2 is illustrated, which meet each other in a centre 3 having two openings 4 for fixing against a robot arm or the like. Further a vacuum nipple 5 is illustrated for connection to a vacuum source. In the ends of each arm 2 suction cups 6 are connectable to the vacuum channels 8.

In fig. 2 the inside of the centre 3 in a free-formed integrated gripping means 1 having arms 2 is illustrated and also vacuum channels 8, which are integrated in said arms 2. The vacuum channels 8 are connected to an assembling channel 7, which via a connecting channel 9 gives the possibility to connect said vacuum nipple 5. The arms 2, the centre 3 the assembling channel 7 and the vacuum channels 8 are by the free-forming method manufactured in one and the same piece or part, where everything is integrated.

The result of a method that by free-forming in a solid material unit manufacture gripping means having integrated vacuum channels can be seen from fig. 3, from which figure it is evident how one of the vacuum channels 8 is connected to a suction cup 6 in a free-formed integrated gripping means 1 and where the vacuum channels 8 are integrated in an arm 2.

In the now described embodiment example a gripping means is illustrated having integrated arms, manufactured according to the invention by free-forming. Of course according to the invention it is possible to provide other forms of a free-formed integrated gripping means in the form of a e.g. a plate having recesses for suction cups. According to the inventive method it is also possible to provide free-formed integrated gripping means, which before have been considered to be impossible to manufacture.

## Claims

1. A method for manufacturing a gripping means for fixing of a detail intended to be handled by aid of a robot arm on a robot and said gripping means comprises an optional number of suction cup provided arms (2) having vacuum channels (8) integrated in a collecting channel (7), **characterized in that** said gripping means (1) is manufactured by free-forming in a solid material unit having integrated vacuum channels (8) which are assembled in an integrated collecting channel (7) in the centre (3) of the gripping means (1), and the collecting channel (7) is assembled to a connecting channel (9) integrated to said collecting channel (7), and in the outer end of the connecting channel (9) a vacuum nipple (5) is connected, to provide a gripping means which is directly adapted to its function and as to its material is optimized to the lowest weight.

2. A method according to claim 1, **characterized in that** the integrated vacuum channels (8) are formed in having to the same connectable suction cups (6) in their outer ends.

3. A method according to claim 1, **characterized in that** the gripping means (1) comprises an optional number of arms (2) having integrated vacuum channels (8).

## Patentansprüche

1. Verfahren zum Herstellen eines Greifmittels zum Fixieren eines Einzelelements, das mit Hilfe eines Roboterarms an einem Roboter bewegt werden soll, und das Greifmittel umfasst eine optionale Anzahl von mit Saugnäpfen versehenen Armen (2), die Vakuumkanäle (8) aufweisen, die in einen Sammelkanal (7) integriert sind, **dadurch gekennzeichnet, dass** das Greifmittel (1) durch Freiformen in einer Vollmaterialeinheit hergestellt wird, das integrierte Vakuumkanäle (8) aufweist, die in der Mitte (3) des Greifmittels (1) in einem integrierten Sammelkanal (7) zusammengeführt werden, und der Sammelkanal (7) wird an einem Verbindungskanal (9) montiert, der in den Sammelkanal (7) integriert ist, und mit dem äußeren Ende des Verbindungskanals (9) wird ein Vakuumnippel (5) verbunden, um ein Greifmittel bereitzustellen, das unmittelbar an seine Funktion angepasst ist und hinsichtlich seines Materials auf das geringste Gewicht hin optimiert ist.

2. Verfahren nach Anspruch 1, **dadurch gekennzeichnet, dass** die integrierten Vakuumkanäle (8) so geformt werden, dass sie an ihren äußeren Enden dieselben verbindbaren Saugnäpfe (6) aufweisen.

3. Verfahren nach Anspruch 1, **dadurch gekennzeichnet, dass** das Greifmittel (1) eine optionale Anzahl von Armen (2) mit integrierten Vakuumkanälen (8) aufweist.

## Revendications

1. Procédé de fabrication d'un dispositif de saisie pour fixer un élément individuel destiné à être manipulé à l'aide d'un bras de robot sur un robot et ledit dispositif de saisie comprend un nombre au choix de bras (2) pourvus de ventouses présentant des canaux sous vide (8) intégrés dans un canal collecteur (7), **caractérisé en ce que** ledit dispositif de saisie (1) est fabriqué par formage libre dans une unité de matériau solide, présentant des canaux sous vide intégrés (8) qui sont assemblés dans un canal collecteur intégré (7) au centre (3) du dispositif de saisie (1), et le canal collecteur (7) est assemblé avec un canal de connexion (9) intégré audit canal collecteur (7), et dans l'extrémité extérieure du canal de connexion (9) un raccord de vide (5) est connecté pour fournir un dispositif de saisie qui est directement adapté à sa fonction et optimisé du point de vue de son matériau au poids le plus faible.

2. Procédé selon la revendication 1, **caractérisé en ce que** les canaux sous vide intégrés (8) sont formés de façon à avoir les mêmes ventouses (6) pouvant être connectées à leurs extrémités extérieures.

3. Procédé selon la revendication 1, **caractérisé en ce que** le dispositif de saisie (1) comprend un nombre au choix de bras (2) présentant des canaux sous vide intégrés (8).
